(19) Europäisches Patentamt
European Patent Office
Office européen des brevets

(11) **EP 2 942 511 A1**

(12) **EUROPÄISCHE PATENTANMELDUNG**

(43) Veröffentlichungstag:
**11.11.2015  Patentblatt 2015/46**

(51) Int Cl.:
***F02C 9/00*** (2006.01)    ***F02C 9/28*** (2006.01)

(21) Anmeldenummer: **14166968.9**

(22) Anmeldetag: **05.05.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Amann, Christian**
**46238 Bottrop (DE)**

• **Beckmann, Björn**
**47057 Duisburg (DE)**
• **Deuker, Eberhard**
**45481 Mülheim an der Ruhr (DE)**
• **Kadau, Kai**
**Lake Wylie, 29710 (US)**
• **Kock, Boris Ferdinand**
**40878 Ratingen (DE)**
• **Rollmann, Georg**
**45472 Mülheim Ruhr (DE)**
• **Schmitz, Sebastian**
**10437 Berlin (DE)**
• **Zwingenberg, Marcel**
**46509 Xanten (DE)**

(54)    **Verfahren zur Auswahl von Betriebspunkten einer Gasturbine**

(57)    Die Erfindung betrifft ein Verfahren zur Auswahl von Betriebspunkten einer Gasturbine unter Berücksichtigung von zumindest einer Regelgröße, wobei die Betriebspunkte zumindest durch Parameterkombinationen von Stellgrößen definiert sind, dadurch gekennzeichnet, dass die Betriebspunkte unter Verwendung eines Interpolationsverfahrens basierend auf bereits bekannten Parameterkombinationen automatisch ausgewählt werden.

EP 2 942 511 A1

EP 2 942 511 A1

**Beschreibung**

Die vorliegende Erfindung betrifft ein Verfahren zur Auswahl von Betriebspunkten einer Gasturbine unter Berücksichtigung von zumindest einer Regelgröße, wobei die Betriebspunkte zumindest durch Parameterkombinationen von Stellgrößen definiert sind.

Gasturbinen sind Strömungsmaschinen, die in der Regel einen Verdichter, eine Turbine und eine Brenneranordnung aufweisen, die mehrere Brenner sowie zumindest eine Brennkammer umfasst, wobei die Brenner verschiedene Brennerstufen bilden, wie beispielsweise eine Pilotbrennerstufe und mehrere Hauptbrennerstufen. Während des Betriebs einer Gasturbine saugt der Verdichter Umgebungsluft an und verdichtet diese. Die verdichtete Luft wird daraufhin zu den einzelnen Brennern geleitet und in diesen mit Brennstoff gemischt. Anschließend werden die erzeugten Brennstoff-Luft-Gemische in der Brennkammer verbrannt. Die bei der Verbrennung entstehenden heißen Verbrennungsabgase werden dann der Turbine zugeführt, in der sie die Leitschaufeln antreiben. Auf diese Weise wird thermische Energie der Verbrennungsabgase in mechanische Arbeit umgewandelt, die einerseits zum Antreiben des Verdichters und andererseits zum Antreiben eines Verbrauchers eingesetzt wird, wie beispielsweise eines Generators zum Erzeugen von elektrischem Strom.

Während des Betriebs einer Gasturbine ist darauf zu achten, dass Werte vorbestimmter Regelgrößen in zulässigen Soll-Bereichen liegen. Als wichtige Regelgröße ist zum einen die Verbrennungsstabilität der Gasturbine zu nennen, die auch als "Brummverhalten" bezeichnet wird. Instabilitäten bei der Verbrennung werden insbesondere aufgrund von resonanten Wärmefreisetzungsschwankungen hervorgerufen und können Schwingungen und Vibrationen der Brennkammer verursachen, welche die Lebensdauer der Brennkammer herabsetzen und Wartungsintervalle verkürzen. Entsprechend ist sicherzustellen, dass zulässige Grenzwerte nicht überschritten werden. Eine weitere wichtige Regelgröße stellt das Emissionsverhalten der Gasturbine dar, die auch von der Verbrennungsstabilität beeinflusst wird. So dürfen in vielen Ländern vorbestimmte Emissionsgrenzwerte nicht überschritten werden. Auch hier muss die Einhaltung der zulässigen Werte gewährleistet sein.

Eine ordnungsgemäße Einstellung einer oder mehrerer Regelgrößen kann durch die Auswahl geeigneter Betriebspunkte der Gasturbine erzielt werden, die zumindest durch Parameterkombinationen von Stellgrößen definiert sind. Als Stellgrößen sind insbesondere ein der Gasturbine zugeführter Gesamtbrennstoffvolumenstrom und eine Aufteilung des Gesamtbrennstoffvolumenstroms auf die einzelnen Brennerstufen der Gasturbine zu nennen. Beide Stellgrößen haben maßgeblichen Einfluss sowohl auf das Emissionsverhalten als auch auf die Verbrennungsstabilität der Gasturbine. Ein Problem besteht allerdings darin, dass die geeigneten Betriebspunkte von Gasturbine zu Gasturbine selbst dann variieren, wenn die Gasturbinen baugleich ausgeführt sind. Grund für diese Variation sind insbesondere unterschiedliche Umgebungsbedingungen, schwankende Gasqualität und spezifische Kundenanforderungen. Zudem können die Betriebspunkte einer Gasturbinenanlage mit der Zeit Veränderungen unterworfen sein. Dies führt dazu, dass die Auswahl geeigneter Betriebspunkte für jede Gasturbine gesondert zu erfolgen hat, ebenso wie eine Nachjustierung von Betriebspunkten.

Die Auswahl geeigneter Betriebspunkte einer Gasturbine erfolgt bislang manuell. Dabei orientiert man sich in erster Linie an Fahrlinien und Kennfeldern bereits bestehender Gasturbinen, die dann modifiziert werden. Eine manuelle Auswahl von Betriebspunkten erfordert aufgrund des großen Parameterraums und der Vielzahl von Einflussgrößen allerdings sehr viel Erfahrung und ist darüber hinaus ausgesprochen zeitintensiv. Auch ist es schwierig, auf unvorhergesehene Abweichungen der Regelgrößen zu reagieren.

Ausgehend von diesem Stand der Technik ist es eine Aufgabe der vorliegenden Erfindung, ein alternatives Verfahren der eingangs genannten Art zu schaffen, das sich einfach, schnell und preiswert durchführen lässt.

Zur Lösung dieser Aufgabe schafft die vorliegende Erfindung ein Verfahren der eingangs genannten Art, das dadurch gekennzeichnet ist, dass die Betriebspunkte unter Verwendung eines Interpolationsverfahrens basierend auf bereits bekannten Parameterkombinationen automatisch ausgewählt werden. Als bekannte Parameterkombinationen werden erfindungsgemäß solche Parameterkombinationen angesehen, für die die zugehörigen Werte der Regelgrößen bekannt sind. Der Einsatz eines Interpolationsverfahrens bei der Auswahl von Betriebspunkten ist dahingehend von Vorteil, dass eine sehr gute Balance zwischen der Exploration des Parameterraums und der Ausnutzung bereits gewonnener Informationen ermöglicht wird, was zu einer sehr effizienten Abrasterung des Parameterraums führt. Basierend auf den bereits vorhandenen oder angefahrenen Parameterkombinationen der Stellgrößen kann jeweils der nächste Betriebspunkt unter der Maßgabe berechnet werden, dass die erwartete Verbesserung ein Maximum einnimmt. Auf diese Weise können optimierte Betriebspunkte automatisch innerhalb kurzer Zeitdauer ausfindig gemacht und ausgewählt werden.

Gemäß einer Ausgestaltung der vorliegenden Erfindung wird als Interpolationsverfahren das Kriging-Interpolations- verfahren eingesetzt. Mit diesem Interpolationsverfahren wurden sehr gute Ergebnisse erzielt.

Bevorzugt umfassen die Stellgrößen einen der Gasturbine zugeführten Gesamtbrennstoffvolumenstrom und/oder eine Aufteilung des der Gasturbine zugeführten Gesamtbrennstoffvolumenstroms auf einzelne Brennerstufen der Gasturbine und/oder eine Gasturbinenaustrittstemperatur und/oder eine Stellung von Vorleitschaufeln der Gasturbine.

Die Regelgrößen beschreiben bevorzugt das Emissionsverhalten der Gasturbine und/oder die Verbrennungsstabilität der Gasturbine, da sich diese Regelgrößen besonders auf das Betriebsverhalten der Gasturbine auswirken.

Bei der Auswahl von Betriebspunkten wird vorteilhaft der Einfluss von Störgrößen berücksichtigt, wie beispielsweise die Umgebungstemperatur und/oder die Luftfeuchte der Umgebung und/oder der Umgebungsdruck und/oder die Dichte und der Heizwert des Brennstoffes, um nur einige Beispiele zu nennen.

Gemäß einer Variante der vorliegenden Erfindung sind die bereits bekannten Parameterkombinationen solche, die durch manuelle Variation der Parameter ermittelt worden sind, wobei bei der manuellen Variation der Parameter bevorzugt von bekannten Parameterkombinationen einer bereits bestehenden Gasturbine ausgegangen wird.

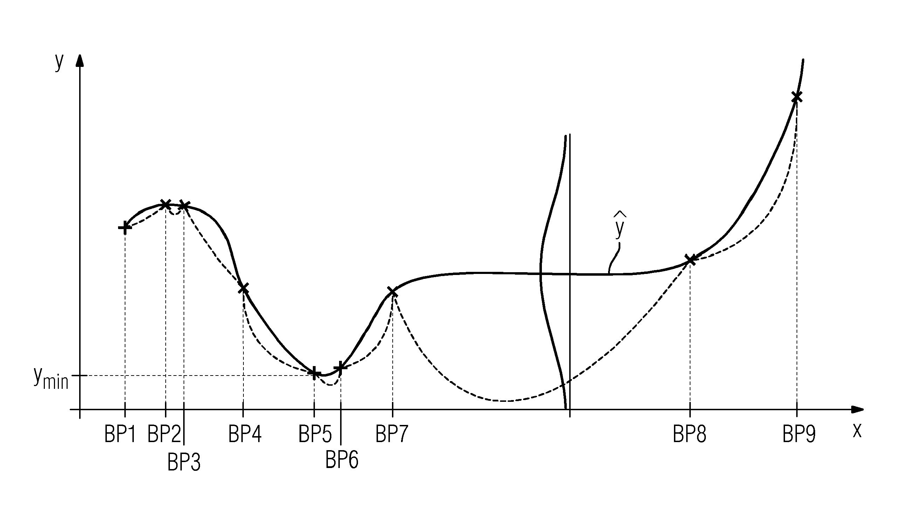

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die beiliegende Zeichnung deutlich, bei der es sich um eine schematisches Diagramm handelt, welches eine Kriging-Interpolation für den eindimensionalen Fall darstellt.

Gemäß Kriging ist eine zu erwartende Verbesserung gegeben durch

$$EI(x) = (y\min - \hat{y}(x)) * \Phi\left(\frac{y\min - \hat{y}(x)}{\hat{s}(x)}\right) + \hat{s} * \phi\left(\frac{y\min - \hat{y}(x)}{\hat{s}(x)}\right)$$

Hierbei gibt $x$ die Parametereinstellung an, $y$ min das bisher gefundene Minimum der Regelgröße, $\hat{y}$ den durch den Kriging-Interpolator vorhergesagten Wert der Regelgröße für x, und s die geschätzte Standardabweichung der Regelgröße, wobei $\Phi$ bzw. $\phi$ die Verteilungsfunktion und Dichtefunktion der Standardnormalverteilung sind.

Das Diagramm zeigt nun beispielhaft die Wirkungsweise der Kriging-Interpolation für den eindimensionalen Fall. Die Betriebspunkte BP1 bis BP9 sind bereits bekannt. Das bedeutet, dass für die Betriebspunkte BP1 bis BP9 die Werte bekannt sind, welche die Regelgröße in diesen Betriebspunkten annimmt. Die jeweiligen Paare sind durch entsprechende Kreuze dargestellt. Die Werte der Regelgrößen für die Betriebspunkte BP1 bis BP9 können beispielsweise durch manuelle Variation der $x$-Werte ermittelt worden sein. Die durchgezogene Linie, welche die Kreuze miteinander verbindet, repräsentiert die Funktion der durch den Kriging-Interpolator vorhergesagten Werte der Regelgröße für unterschiedliche $x$-Werte. Die gestrichelte Linie repräsentiert ein unteres Konfidenzband. Die Unsicherheit ist naturgemäß dort am größten, wo erst wenige Informationen vorliegen, hier zwischen den Betriebspunkten BP7 und BP8, die in Richtung der x-Achse am weitesten voneinander entfernt sind. Ferner dargestellt ist eine untere Schranke, welche die erwartete Verbesserung definiert. Entsprechend kann sich ein weiterer Betriebspunkt BP10 durchaus in einem Bereich befinden, in dem zwar keine besonders niedrigen Werte für $y$ gefunden wurden, der Informationsgehalt jedoch noch gering ist.

Bei dem erfindungsgemäßen Verfahren wird das in der Zeichnung beispielhaft dargestellte Kriging-Verfahren im mehrdimensionalen Parameterraum angewandt, um basierend auf bereits bekannten Betriebspunkten neue viel versprechende Betriebspunkte systematisch zu suchen und, sollten sich diese als geeignet erweisen, automatisch auszuwählen. Dabei können grundsätzlich beliebig viele Stellgrößen und Regelgrößen berücksichtigt werden. Die Betriebspunkte werden dabei durch Parameterkombinationen der Stellgrößen definiert. Alternativ können Betriebspunkte durch Parameterkombinationen aus Stellgrößen und Störgrößen definiert werden.

Die Stellgrößen können einen der Gasturbine zugeführten Gesamtbrennstoffvolumenstrom und/oder eine Aufteilung des der Gasturbine zugeführten Gesamtbrennstoffvolumenstroms auf einzelne Brennerstufen der Gasturbine und/oder eine Gasturbinenaustrittstemperatur und/oder eine Stellung von Vorleitschaufeln der Gasturbine umfassen, um nur einige Beispiele zu nennen.

Die Regelgrößen können beispielsweise das Emissionsverhalten der Gasturbine und/oder Verbrennungsstabilität der Gasturbine beschreiben.

Beispiele für Störgrößen sind die Umgebungstemperatur und/oder die Luftfeuchte der Umgebung und/oder der Umgebungsdruck.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Auswahl von Betriebspunkten einer Gasturbine unter Berücksichtigung von zumindest einer Regelgröße, wobei die Betriebspunkte zumindest durch Parameterkombinationen von Stellgrößen definiert sind, **dadurch gekennzeichnet, dass** die Betriebspunkte unter Verwendung eines Interpolationsverfahrens basierend auf bereits bekannten Parameterkombinationen automatisch ausgewählt werden.

2. Verfahren nach Anspruch 1, **dadurch gekennzeichnet, dass** als Interpolationsverfahren das Kriging-Interpolationsverfahren verwendet wird.

3. Verfahren nach einem der vorhergehenden Ansprüche, **dadurch gekennzeichnet, dass** die Stellgrößen einen der Gasturbine zugeführten Gesamtbrennstoffvolumenstrom und/oder eine Aufteilung des der Gasturbine zugeführten Gesamtbrennstoffvolumenstroms auf einzelne Brennerstufen der Gasturbine und/oder eine Gasturbinenaustrittstemperatur und/oder eine Stellung von Vorleitschaufeln der Gasturbine umfassen.

4. Verfahren nach einem der vorhergehenden Ansprüche, **dadurch gekennzeichnet, dass** die Regelgrößen das Emissionsverhalten der Gasturbine und/oder Verbrennungsstabilität der Gasturbine beschreiben.

5. Verfahren nach einem der vorhergehenden Ansprüche, **dadurch gekennzeichnet, dass** bei der Auswahl von Betriebspunkten der Einfluss von Störgrößen berücksichtigt wird.

6. Verfahren nach Anspruch 5, **dadurch gekennzeichnet, dass** die Störgrößen die Umgebungstemperatur und/oder die Luftfeuchte der Umgebung und/oder der Umgebungsdruck umfassen.

7. Verfahren nach einem der vorhergehenden Ansprüche, **dadurch gekennzeichnet, dass** die bereits bekannten Parameterkombinationen solche sind, die durch manuelle Variation der Parameter ermittelt worden sind.

8. Verfahren nach Anspruch 7, **dadurch gekennzeichnet, dass** bei der manuellen Variation der Parameter von bekannten Parameterkombinationen einer bereits bestehenden Gasturbine ausgegangen wird.

Europäisches
Patentamt

European
Patent Office

Office européen
des brevets

## EUROPÄISCHER RECHERCHENBERICHT

**Nummer der Anmeldung**

EP 14 16 6968

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/064343 A1 (NUOVO PIGNONE SPA [IT]; BOTARELLI CLAUDIO [IT]) 3. Juni 2011 (2011-06-03) | 1,3-8 | INV. F02C9/00 F02C9/28 |
| A | * das ganze Dokument * | 2 | |
| | ----- | | |
| X | US 2008/229754 A1 (GOEBEL KAI FRANK [US] ET AL) 25. September 2008 (2008-09-25) * Absätze [0005], [0044] - [0064], [0082] * | 1,3-6 | |
| | ----- | | |
| X | EP 2 423 489 A2 (GEN ELECTRIC [US]) 29. Februar 2012 (2012-02-29) * Absätze [0002] - [0005], [0016], [0026], [0027] * | 1,3-6 | |
| | ----- | | |

**RECHERCHIERTE SACHGEBIETE (IPC)**

F02C

Der vorliegende Recherchenbericht wurde für alle Patentansprüche erstellt

| Recherchenort | Abschlußdatum der Recherche | Prüfer |
|---|---|---|
| Den Haag | 12. November 2014 | de la Loma, Andrés |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

                        .............................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 14 16 6968

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2014

| Im Recherchenbericht angeführtes Patentdokument | Datum der Veröffentlichung | Mitglied(er) der Patentfamilie | Datum der Veröffentlichung |
|---|---|---|---|
| WO 2011064343 A1 | 03-06-2011 | AU 2010323059 A1 | 14-06-2012 |
| | | CA 2782057 A1 | 03-06-2011 |
| | | CN 102725498 A | 10-10-2012 |
| | | EP 2504547 A1 | 03-10-2012 |
| | | JP 2013512381 A | 11-04-2013 |
| | | KR 20120106780 A | 26-09-2012 |
| | | RU 2012122723 A | 10-01-2014 |
| | | US 2012279230 A1 | 08-11-2012 |
| | | WO 2011064343 A1 | 03-06-2011 |
| US 2008229754 A1 | 25-09-2008 | KEINE | |
| EP 2423489 A2 | 29-02-2012 | CN 102345515 A | 08-02-2012 |
| | | EP 2423489 A2 | 29-02-2012 |
| | | JP 2012026449 A | 09-02-2012 |
| | | US 2012023953 A1 | 02-02-2012 |

EPO FORM P0461

Für nähere Einzelheiten zu diesem Anhang : siehe Amtsblatt des Europäischen Patentamts, Nr.12/82